# EUROPÄISCHE PATENTSCHRIFT

(11) **EP 1 940 970 B1**
(45) Veröffentlichungstag und Bekanntmachung des Hinweises auf die Patenterteilung: **14.01.2009**
(21) Anmeldenummer: 06791992.8
(22) Anmeldetag: 12.09.2006
(51) Int. Cl.: C09B 67/48, C09B 67/04

(54) **VERFAHREN ZUR HERSTELLUNG VON FEINTEILIGEM C.I. PIGMENT RED 254**
METHOD FOR PRODUCING FINE-PARTICLE C.I. PIGMENT RED 254
PROCEDE DE PRODUCTION D'UN ROUGE PIGMENTAIRE 254 A FINES PARTICULES DU COLOUR INDEX

(30) Priorität: 21.10.2005 DE 102005050511
(43) Veröffentlichungstag der Anmeldung: 09.07.2008
(73) Patentinhaber: Clariant Produkte (Deutschland) GmbH, 65929 Frankfurt am Main (DE)
(72) Erfinder: REIPEN, Tanja, 55124 Mainz (DE); PLÜG, Carsten, 64367 Mühltal/Niederbeerbach (DE)
(74) Vertreter: Hütter, Klaus
(86) Internationale Anmeldenummer: PCT/EP2006/008867
(87) Internationale Veröffentlichungsnummer: WO 2007/045312

(56) Entgegenhaltungen:
- EP-A- 0 678 558
- EP-A- 0 678 559
- EP-A1- 0 979 846
- EP-A1- 1 101 800
- EP-A2- 0 337 435
- EP-A2- 0 524 904
- EP-A2- 0 845 504
- WO-A-01/04215

## Beschreibung

Die vorliegende Erfindung betrifft ein neues Verfahren zur Herstellung von feinteiligem C.I. Pigment Red 254 mittels einer Rührwerkskugelmühle.

Zur Herstellung hochtransparenter dauerhafter Färbungen werden besonders feinteilige organische Farbpigmente benötigt, um die Partikel-Streuung weitgehend auszuschließen: Gegenüber ebenfalls hochtransparenten Farbstofffärbungen weisen Pigmente eine deutlich bessere Lichtechtheit auf. Neben der, aus Druckverfahren bekannten, klassischen Farbkombination Cyan-Magenta-Gelb setzt sich in neuen Gebieten wie Colorfiltern zunehmend das Trichromiesystem Rot-Grün-Blau (RGB) durch. Durch die jeweilige Kombination von jeweils drei Grundfarbtönen wird versucht, einen möglichst großen Farbraum abzubilden. Die jeweiligen Grundfarbtöne können dabei durch die Verwendung einzelner Pigmente oder die Kombinationen verschiedener Pigmente oder sogar durch Kombination von Pigmenten mit Farbstoffen erzeugt werden. Für rote Grundfarbtöne wird zunehmend feinteiliges C.I. Pigment Red 254 (I) 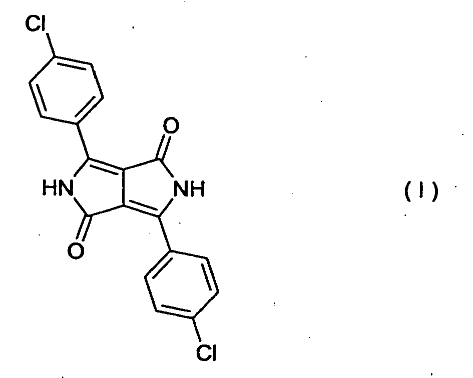 allein oder in Kombination mit anderen Farbmitteln eingesetzt, da es einen reinen Farbton mit guter Transparenz und mit guten Echtheitseigenschaften verbindet.

WO 01/04215 offenbart ein besonders feinteiliges C.I. Pigment Red 254, das durch eine besonders enge Teilchengrößenverteilung gepaart mit hoher Kristallinität und einer speziellen Absorptionscharakteristik gekennzeichnet ist. Ein solches C.I. Pigment Red 254 kann erhalten werden, indem ein Rohpigment zunächst mit einem anorganischen Salz trocken bei mindestens 80°C gerührt und somit in eine weitgehend amorphe Form übergeführt wird und anschließend einem Knetprozess mit anorganischen Salzen in Gegenwart von organischen Lösungsmitteln ausgesetzt wird.

Der beschriebene Herstellprozess dieses hochtransparenten Pigments ist jedoch mit Nachteilen verbunden. Durch den Knetprozess fallen große Mengen an Salz und hochsiedendem Lösungsmittel an, die die Menge an erhaltenem Pigment bei weitem übersteigen und die technisch aufwendig zurückgewonnen oder entsorgt werden müssen. Das ganze Herstellverfahren des feinteiligen Pulverpigmentes umfasst somit die Prozessschritte Vorvermahlung zum amorphen Zustand-Salzknetung - Anteigen in Wasser - Filtrieren - salzfrei Waschen - Trocknen, und ist somit sehr aufwendig. Zudem kann das zu mahlende Rohpigment nur in trockener Form eingesetzt werden, was einen zusätzlichen Arbeitsschritt nach der Synthese des Materials bedeutet. Üblicherweise wird C.I. Pigment Red 254 nach der Synthese als wasserfeuchter Filterkuchen gewonnen.

Es bestand somit die Aufgabe, ein Verfahren für feinteiliges C.I. Pigment Red 254, insbesondere mit den in WO 01/04215 beschriebenen Eigenschaften, zur Verfügung zu stellen, das die genannten Nachteile überwindet und das von einem Rohpigment in Form eines wasserfeuchten Filterkuchens ausgehen kann.

Es wurde gefunden, dass die Mahlung von C.I. Pigment Red 254 in einer Rührwerkskugelmühle überraschenderweise diese Aufgabe löst, obwohl mit dieser Methode zu keinem Zeitpunkt eine amorphe Form des Pigments durchlaufen wird, was laut WO 01/04215 zwingend erforderlich gewesen wäre.

Die EP -A- 0,337,435 betrifft u.a. ein Verfahren zur Herstellung einer deckenden Form des 3,6-Di(4-chlorphenyl)-1,4-diketopyrrolopyrrols (= Pigmentrot 254), wobei das Rohpigment auf einer Rollbank unter Anwesenheit von Keramikkugeln gedreht wird.

Im Verfahren der EP -A- 0, 979,846 wird ein Rohpigment des N,N'-Dimethylperylen-3,4,9,10-tetracarbonsäurediimids ebenfalls in einer Rührwerkskugelmühle, die mit einer Leistungsdichte von mehr als 1,5 kW pro Liter Mahlraum und einer Rührwerksumfangsgeschwindigkeit von mehr als 12 m/s betrieben wird, unter Einwirkung von Mahlkörpern vermahlt. Auch in den Verfahren der EP -A- 0,678,559 (Chinacridone, Perylene oder Dioxazine) und der EP -A- 0,678,558 (Kupferphthalocyaninrohpigmente) wird eine Rührwerkskugelmühle mit etwas höherem Energieeintrag als im anmeldungsgemässen Verfahren als Mahlapparat verwendet.

Das erfindungsgemäße Verfahren erlaubt die gezielte Erreichung einer Feinteiligkeit im Bereich 0.01 bis 0.12 µm (d50), ohne dass die erforderliche Kristallinität verloren geht. Die Kristallinität ist charakterisiert durch eine Halbwertsbreite von kleiner als 0.7° 2Theta des größten Peaks (bei 28.3° 2Theta) im Röntgenpulverdiffraktogramm (CuK_{α}-Strahlung). Die Linienlagen im Röntgenpulverdiffraktogramm sind üblicherweise mit einer Ungenauigkeit von +/- 0,2° behaftet.

Gegenstand der Erfindung ist ein Verfahren zur Herstellung von C.I. Pigment Red 254 mit einer mittleren Teilchengröße (d₅₀) von 10 bis 120 nm, vorzugsweise 20 bis 100 nm, einer Halbwertsbreite des Peaks bei 28.3° 2Theta von 0.2 bis 0.7° 2Theta, insbesondere von 0.3 bis 0.66° 2Theta, im Röntgenpulverdiffraktogramm mit Cu-Kₐₗₚₕₐ Strahlung, gekennzeichnet durch eine Mahlung eines kristallinen Rohprodukts von C.I. Pigment Red 254 in einer Rührwerkskugelmühle, die mit einer Leistungsdichte von mehr als 1,0 kW, insbesondere mehr als 1,5 kW, pro Liter Mahlraum und einer Rührwerksumfanggeschwindigkeit von mehr als 12 m/s betrieben wird, in einem flüssigen Medium unter Einwirkung von Mahlkörpern, vorzugsweise vom Durchmesser gleich oder kleiner als 0,9 mm.

Die erfindungsgemäße Rührwerkskugelmühle ist zum diskontinuierlichen oder kontinuierlichen Arbeitsablauf ausgelegt, mit zylinderförmigem oder hohlzylinderförmigem Mahlraum in horizontaler oder vertikaler Bauweise. Dafür geeignete Mühlen sind beispielsweise in der DE-PS-3 716 587 beschrieben. Die pro Zeiteinheit vom Rührwerk abgegebene Energie wird als Zerkleinerungsarbeit und als Reibungsenergie in Form von Wärme auf das Mahlgut übertragen. Zur problemlosen Abführung dieser großen Wärmemenge muss durch konstruktive Vorkehrungen das Verhältnis von Mahlraum zu Mahlraumoberfläche (Kühlfläche) möglichst klein gehalten werden. Bei hohen Durchsätzen wird im Kreislauf gemahlen, und die Wärme wird überwiegend über das Mahlgut nach außen abgeführt. Als Mahlkörper dienen Kugeln aus Zirkonoxid, Zirkonmischoxid, Aluminiumoxid oder Quarz. Bevorzugte Durchmesser sind gleich oder kleiner als 0,9 mm; zweckmäßig werden solche mit einem Durchmesser von 0,2 bis 0,9 mm, vorzugsweise 0,3 bis 0,5 mm, verwendet. Es gibt jedoch auch Mühlen, die mit Mahlkörpern mit einer Größe von 30 - 50 µm betrieben werden können und den geforderten Energieeintrag erbringen.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so dass die Trennvorrichtungen von den Mahlkörpern praktisch nicht berührt werden, wodurch Verstopfungen derselben weitgehend verhindert werden. Die Rührwerkskugelmühlen werden hierbei mit hohem Mahlkörperfüllgrad betrieben. Bei den kontinuierlichen Rührwerkskugelmühlen wird der Mahlraum praktisch vollständig mit Mahlkörpern ausgefüllt.

Die Mahldauer ist abhängig von der erwünschten Feinteiligkeit des C.I. Pigment Red 254. Deshalb liegt die Verweilzeit des Mahlguts in der Rührwerkskugelmühle im Allgemeinen zwischen 3 und 60 Minuten, vorzugsweise zwischen 4 und 45 Minuten, besonders bevorzugt zwischen 5 bis 30 Minuten.
Die Mahlung wird vorteilhaft bei Temperaturen im Bereich von 0 bis 100°C, vorzugsweise bei einer Temperatur zwischen 10 und 60°C, besonders bevorzugt bei 20 bis 50°C, durchgeführt.

Das flüssige Medium im erfindungsgemäßen Verfahren ist zweckmäßigerweise Wasser. Es kann jedoch auch ein wässrig-organisches Medium eingesetzt werden. Als organische Lösemittel kommen Alkohole mit 1 bis 10 C-Atomen, wie beispielsweise Methanol, Ethanol, n-Propanol, Isopropanol, Butanole, wie n-Butanol, iso-Butanol, tert.-Butanol, Pentanole, wie n-Pentanol, 2-Methyl-2-butanol, Hexanole, wie2-Methyl-2-pentanol,3-Methyl-3-pentanol, 2-Methyl-2-hexanol, 3-Ethyl-3-pentanol, Octanol, wie 2,4, 4-Trimethyl-2-pentanol, Cyclohexanol; oder Glykole, wie Ethylenglykol, Diethylenglykol, Propylenglykol, Dipropylenglykol, oder Glycerin; Polyglykole, wie Polyethylen- oder Polypropylenglykole; Ether, wie Methylisobutylether, Tetrahydrofuran, Dimethoxyethan oder Dioxan; Glykolether, wie Monomethyl- oder Monoethylether des Ethylen- oder Propylenglykols, Diethylenglykolmonomethylether, Diethylenglykol-monoethylether, Butylglykole oder Methoxybutanol; Ketone, wie Aceton, Diethylketon, Methylisobutylketon, Methylethylketon oder Cyclohexanon ; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-alkylester, wie Ameisensäurebutylester, Essigsäureethylester oder Propionsäurepropylester; oder Carbonsäure-C₁-C₆-glykolester; oder Glykoletheracetate, wie 1-Methoxy-2-propylacetat; oder Phthalsäure- oder Benzosäure-C₁-C₆-alkylester, wie Benzoesäureethylester; cyclische Ester, wie Caprolacton; Nitrile, wie Acetonitril oder Benzonitril; aliphatische oder aromatische Kohlenwasserstoffe, wie Cyclohexan oder Benzol; oder durch Alkyl, Alkoxy, Nitro oder Halogen substituiertes Benzol, wie Toluol, Xylole, Ethylbenzol, Anisol, Nitrobenzol, Chlorbenzol, o-Dichlorbenzol, 1,2,4-Trichlorbenzol oder Brombenzol; oder andere substituierte Aromaten, wie Benzoesäure oder Phenol; aromatische Heterocyclen, wie Morpholin, Picolin oder Chinolin; sowie Hexamethylphosphorsäuretriamid, 1,3-Dimetyl-2-imidazolidinon, Dimethylsulfoxid und Sulfolan in Betracht.

Besonders bevorzugt sind Wasser und Mischungen aus C₁-C₆-Alkoholen, N-Methyl-pyrrolidon und/oder Glykolen mit Wasser.

Nach Abschluss der Mahlung werden die Pigmente in üblicher Weise durch Filtration isoliert. Vor einer Isolation eines Pigments kann ein gegebenenfalls eingesetztes Lösemittel destillativ, gegebenenfalls unter reduziertem Druck, oder auch durch Wasserdampfdestillation entfernt werden.

Das eingesetzte Rohpigment ist kristalliner Natur, vorzugsweise gekennzeichnet durch eine Halbwertsbreite des größten Peaks bei 28.3° 2Theta von 0.1 bis 0.5° 2Theta, insbesondere von 0.2 bis 0.4° 2Theta, im Röntgenpulverdiffraktogramm mit Cu-Kₐₗₚₕₐ Strahlung, und durch eine mittlere Teilchengröße von 150 bis 1000 nm, bevorzugt 200 bis 500 nm. Es kann beispielsweise nach US-A-4,579,949 hergestellt werden und in pulverförmiger Form oder bevorzugt als wasserfeuchter Filterkuchen oder Feuchtgranulat zum Einsatz kommen.

Die bei der erfindungsgemäßen Mahlung erhaltene Mahlsuspension kann als solche oder nach Filtration als Filterkuchen oder getrocknetes Material gegebenenfalls einer Lösungsmittelnachbehandlung unterzogen werden, um eine homogenere Teilchenform zu erhalten, ohne die Teilchengröße merklich zu erhöhen. Bevorzugt ist die Verwendung von Wasser oder wasserdampfflüchtigen Lösungsmitteln wie Alkoholen und aromatischen Lösungsmitteln, besonders bevorzugt verzweigte oder unverzweigte C₁-C₆-Alkohole, Toluol, Xylol, Chlorbenzol, Dichlorbenzol, Nitrotoluol oder Nitrobenzol meist unter erhöhter Temperatur, beispielsweise bis 200°C, und gegebenenfalls unter erhöhtem Druck.

Bei der Trocknung eines feuchten Pigments können die bekannten Trockenaggregate zum Einsatz kommen, wie Trockenschränke, Schaufelradtrockner, Taumeltrockner, Kontakttrockner und insbesondere Spinflash- und Sprühtrockner.
Das nach dem erfindungsgemäßen Verfahren erhaltene Pigment kann noch weitere übliche Hilfsmittel oder Zusatzstoffe enthalten, wie beispielsweise Tenside, nichtpigmentäre oder pigmentäre Dispergiermittel, Füllstoffe, Stellmittel, Harze, Wachse, Entschäumer, Antistaubmittel, Extender, Antistatika, Konservierungsmittel, Trocknungsverzögerungsmittel, Netzmittel, Antioxidantien, UV-Absorber und Lichtstabilisatoren, vorzugsweise in einer Menge von 0,1 bis 10 Gew.-%, insbesondere 0,5 bis 5 Gew.-%, bezogen auf das Gesamtgewicht des Pigmentes.

Als Tenside kommen anionische oder anionaktive, kationische oder kationaktive und nichtionische oder amphotere Substanzen oder Mischungen dieser Mittel in Betracht.

Als anionaktive Substanzen kommen beispielsweise Fettsäuretauride, FettsäureN-methyltauride, Fettsäureisethionate, Alkylphenylsulfonate, beispielsweise Dodecylbenzolsulfonsäure, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykol-ethersulfosuccinate, Alkansulfonate, Fettsäureglutamate, Alkylsulfosuccinate, Fettsäuresarkoside; Fettsäuren, beispielsweise Palmitin-, Stearin- und Ölsäure; die Salze dieser anionischen Substanzen und Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylamino-propylamin und p-Phenylendiamin in Betracht. Bevorzugt sind Harzseifen, d.h. Alkalisalze von Harzsäuren.

Als kationaktive Substanzen kommen beispielsweise quaternäre Ammoniumsalze, Fettaminoxalkylate, Polyoxyalkylenamine, oxalkylierte Polyamine, Fettaminpolyglykolether, primäre, sekundäre oder tertiäre Amine, beispielsweise Alkyl-, Cycloalkyl oder cyclisierte Alkylamine, insbesondere Fettamine, von Fettaminen oder Fettalkoholen abgeleitete Di- und Polyamine und deren Oxalkylate, von Fettsäuren abgeleitete Imidazoline, Polyaminoamido- oder Polyaminoverbindungen oder -harze mit einem Aminindex zwischen 100 und 800 mg KOH pro g der Polyaminoamido- oder Polyaminoverbindung, und Salze dieser kationenaktiven Substanzen, wie beispielsweise Acetate oder Chloride, in Betracht.
Als nichtionogene und amphotere Substanzen kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht.

Mit nichtpigmentären Dispergiermitteln sind vorzugsweise Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Colorfiltern durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Blockcopolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Dispergiermittel können des Weiteren auch chemisch mit funktionellen Gruppen modifizierte aromatische Substanzen sein. Derartige Dispergiermittel sind dem Fachmann bekannt und zum Teil im Handel erhältlich (z.B. Solsperse^{®}, Avecia; Disperbyk^{®}, Byk-Chemie, Efka^{®}, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermitteln sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäure-, Sulfonamid- oder Sulfosäureestergruppen haltige Pigmentdispergatoren, Ether- oder Thioethergruppen haltige Pigmentdispergatoren, oder Carbonsäure-, Carbonsäureester- oder Carbonamidgruppen-haltige Pigmentdispergatoren.

Anionische Gruppen der als Hilfsmittel eingesetzten nichtpigmentären und pigmentären Dispergatoren, Tenside oder Harze können auch verlackt werden, beispielsweise durch Ca-, Mg-, Ba-, Sr-, Mn- oder Al-Ionen oder durch quaternäre Ammoniumionen.

Mit Füllstoffen bzw. Extender sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid. Dabei hat sich die Zugabe besonders vor der Pulverisierung der getrockneten Pigmentzubereitung bewährt.

Unter Halbwertsbreite HWB versteht man die Breite eines Reflexes in halber Höhe (Hälfte des Maximums).
Die Halbwertsbreite der Proben wird mit einem STOE /θ-Diffraktometer (Cu-K_{α}, U = 40 kV, I = 40 mA) gemessen (Blenden: primärseitig/vertikal 2 x 8 mm, primärseitig/ horizontal 1.0 mm, sekundärseitig 0.5 mm). Als Probenträger wird ein Standard-Stahlträger verwendet. Die Messzeit ist an die gewünschte statistische Sicherheit angepasst, der Winkelbereich 2θ beträgt in der Übersichtsmessung 5 - 30° und die Schrittweite 0.02° mit einer Zeitperiode von 3 s. Im Spezialbereich wird von 23 - 30° mit einer Schrittweite von 0.02° und einer Zeitperiode von 6 s gemessen.
Der Röntgenstrahl wird durch einen Graphit-Sekundärmonochromator monochromatisiert und mit einem Szintillationszähler unter kontinuierlicher Probendrehung vermessen. Zur Auswertung wird ein Profilfit über den gesamten Winkelbereich der zweiten Messung 2θ = 23 - 30° durchgeführt (Fitfunktion: Lorentz² (4 Reflexe)).

Für die Teilchengrößenverteilung wird eine Serie elektronenmikroskopischer Aufnahmen verwendet. Die Primärteilchen werden visuell identifiziert. Die Fläche jedes Primärteilchens wird mit Hilfe eines graphischen Tabletts bestimmt. Aus der Fläche wird der Durchmesser des flächengleichen Kreises ermittelt. Die Häufigkeitsverteilung der so berechneten Äquivalentdurchmesser wird bestimmt, und die Häufigkeiten in Volumenanteile umgerechnet und als Teilchengrößenverteilung dargestellt.

### Beispiel 1

Ein Gemisch aus 10 g P.R. 254, hergestellt nach Beispiel 6 der US-A-4,579,949, einer mittleren Teilchengröße von 250 nm und einer Halbwertsbreite des Hauptpeaks bei 28.3° 2Theta (CuK_{α}) von 0.233° 2Theta, 360 g Zirkonmischoxid-Perlen (0.3-0.4 mm) und 90 g Wasser wird in einer Drais^{®} PML-Mühle mit einer Rührwerksumfangs-geschwindigkeit von 15.6 m/s sowie einer spezifischen Leistungsdichte von 3.1 kW pro Liter Mahlraum für 15 min gemahlen.
Das Mahlgut wird von den Perlen getrennt, filtriert, im Vakuum getrocknet und abschließend pulverisiert. Das entstandene Produkt hat eine Halbwertsbreite des Hauptpeaks bei 28.3 °2Theta (CuK_{α}) von 0.538° 2Theta, einen d₅₀-Wert von etwa 60 nm und einen Grobkornanteil (Teilchen größer als 100 nm) von unter 5 %.

### Beispiel 2

Ein Gemisch aus 10 g P.R. 254, hergestellt nach Beispiel 6 der US-A-4,579,949, einer mittleren Teilchengröße von 250 nm und einer Halbwertsbreite des Hauptpeaks bei 28.3° 2Theta (CuK_{α}) von 0.233° 2Theta, 360 g Zirkonmischoxid-Perlen (0.3-0.4 mm) und 90 g Wasser wird in einer Drais^{®} PML-Mühle mit einer Rührwerksumfangs-geschwindigkeit von 15.6 m/s sowie einer spezifischen Leistungsdichte von 3.1 kW pro Liter Mahlraum für 30 min gemahlen. Das Mahlgut wird von den Perlen getrennt, filtriert, im Vakuum getrocknet und abschließend pulverisiert. Das entstandene Produkt hat eine Halbwertsbreite des Hauptpeaks bei 28.3 °2Theta (CuK_{α}) von 0.630° 2Theta, einen d₅₀-Wert von etwa 60 nm und einen Grobkornanteil (Teilchen größer als 100 nm) von unter 5 %.

### Beispiel 3

Ein Gemisch aus 10 g P.R. 254, hergestellt nach Beispiel 6 der US-A-4,579,949, einer mittleren Teilchengröße von 250 nm und einer Halbwertsbreite des Hauptpeaks bei 28.3° 2Theta (CuK_{α}) von 0.233° 2Theta, 360 g Zirkonmischoxid-Perlen (0.3-0.4 mm) und 90 g Wasser wird in einer Drais^{®} PML-Mühle mit einer Rührwerksumfangs-geschwindigkeit von 15.6 m/s sowie einer spezifischen Leistungsdichte von 3.1 kW pro Liter Mahlraum für 45 min gemahlen. Das Mahlgut wird von den Perlen getrennt, filtriert, im Vakuum getrocknet und abschließend pulverisiert. Das entstandene Produkt hat eine Halbwertsbreite des Hauptpeaks bei 28.3 °2Theta (CuK_{α}) von 0.652° 2Theta, einen d₅₀-Wert von etwa 60 nm und einen Grobkornanteil (Teilchen größer als 100 nm) von unter 5 %.

### Beispiel 4

Ein Gemisch aus 2564 g eines wasserfeuchten Filterkuchens von C.I. Pigment Red 254 (39 gew.-%ig), hergestellt nach Beispiel 6 der US-A-4,579,949, einer mittleren Teilchengröße von 250 nm und einer Halbwertsbreite des Hauptpeaks bei 28.3° 2Theta (CuK_{α}) von 0.233° 2Theta und 100 g eines handelsüblichen Fließverbesserers auf Naphthalinsulfonsäure-Basis, wird homogen angeteigt und mit einer Drais^{®} Super Flow Mühle in Gegenwart von 2190 g Zirkondioxid-Perlen (0.3-0.4 mm) mit einer Rührwerks-umfangsgeschwindigkeit von 13.3 m/s sowie einer spezifischen Leistungsdichte von 5.5 kW (1.2 Liter Mahlraum) gemahlen, wobei die Pigmentkonzentration durch Zugabe von Wasser auf 10 Gew.-% eingestellt wird. Die Mahldauer entspricht zwei bis drei theoretischen Mahlpassagen. Die Mahlsuspension wird mit Isobutanol versetzt, so dass eine 1:1-Mischung aus Isobutanol und Wasser entsteht. Die Suspension wird bei pH 7 in Gegenwart eines Phosphatpuffers für 2 h zum Rückfluss erhitzt, nach der Abtrennung des Isobutanols durch Wasserdampfdestillation abfiltriert, mit Wasser phosphatfrei gewaschen, im Vakuum getrocknet und abschließend pulverisiert. Man erhält 800 g des Pigments mit einer mittleren Teilchengröße von 100 nm (TEM), wobei der Anteil an Teilchen größer als 150 nm unter 5% liegt. Das Produkt hat eine Halbwertsbreite des Hauptpeaks bei 28.3 °2Theta (CuK_{α}) von 0.342° 2Theta.

### Beispiel 5

Ein Gemisch aus 911 g eines wasserfeuchten Filterkuchens von C.I. Pigment Red 254 (44 gew.-%ig), hergestellt nach Beispiel 6 der US-A-4,579,949, einer mittleren Teilchengröße von 250 nm und einer Halbwertsbreite des Hauptpeaks bei 28.3° 2Theta (CuK_{α}) von 0.233° 2Theta, 12 g eines handelsüblichen Fließverbesserers auf Naphthalinsulfonsäure-Basis und 40 g eines Pigmentdispergators der Formel (II), 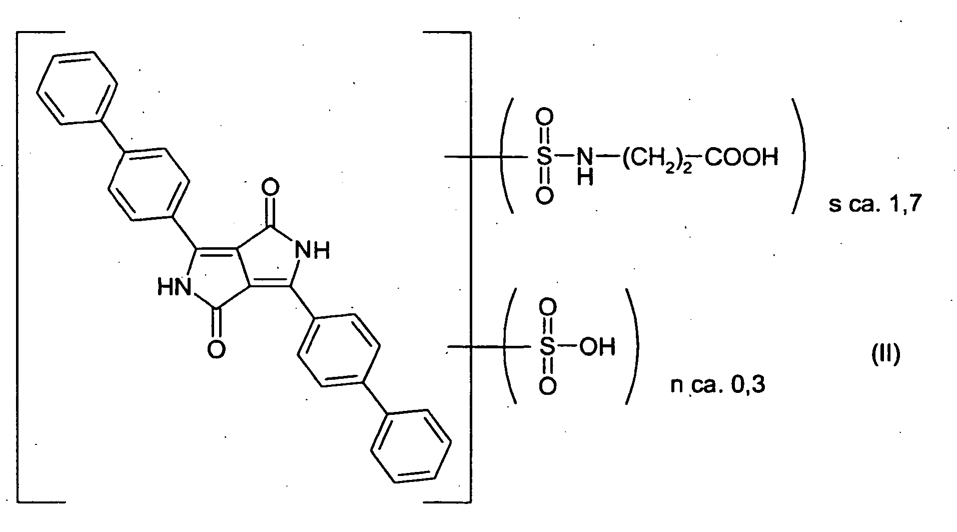 der gemäß Beispiel 1 a aus der EP 1 362 081 hergestellt wurde, wird im Dissolver homogen angeteigt (900 Upm) und anschließend mit einer Drais^{®} Super Flow Mühle in Gegenwart von 2190 g Zirkondioxid-Perlen (0.3-0.4 mm) mit einer Rührwerks-umfangsgeschwindigkeit von 13.3 m/s sowie einer spezifischen Leistungsdichte von 5.5 kW (1.2 Liter Mahlraum) gemahlen, wobei die Pigmentkonzentration durch Zugabe von Wasser auf 10 Gew.-% eingestellt wird. Die Mahldauer entspricht zwei bis drei theoretischen Mahlpassagen. Die Mahlsuspension wird mit Isobutanol versetzt, so dass eine 1:1-Mischung aus Isobutanol und Wasser entsteht. Die Suspension wird mit Phosphorsäure auf pH 2 angesäuert und für 2 h zum Rückfluss erhitzt, nach der Abtrennung des Isobutanols durch Wasserdampfdestillation filtriert. Der Filterkuchen wird mit Wasser gewaschen, im Vakuum getrocknet und abschließend pulverisiert. Man erhält 350 g eines Pigments mit einer mittleren Teilchengröße von 37 nm (TEM), wobei der Anteil an Teilchen größer als 73 nm unter 5% liegt. Die Halbwertsbreite des Hauptpeaks bei 28.3 °2Theta (CuK_{α}) liegt bei 0.431° 2Theta.

### Beispiel 6

Ein Gemisch aus 995 g eines wasserfeuchten Filterkuchens von C.I. Pigment Red 254 (40 gew.-%ig), hergestellt nach Beispiel 6 der US-A-4,579,949, einer mittleren Teilchengröße von 250 nm und einer Halbwertsbreite des Hauptpeaks bei 28.3° 2Theta (CuK_{α}) von 0.233° 2Theta, 32 g der 25 %igen Lösung eines Natriumsalzes eines handelsüblichen Styrolacrylatharzes (M > 15000) in Wasser und 20 g eines Pigmentdispergators der Formel (II), der gemäß Beispiel 1a aus der EP 1362081 hergestellt wurde, wird im Dissolver homogen angeteigt (900 Upm) und anschließend mit einer Drais^{®} Super Flow Mühle in Gegenwart von 2190 g Zirkondioxid-Perlen (0.3-0.4 mm) mit einer Rührwerksumfangsgeschwindigkeit von 13.3 m/s sowie einer spezifischen Leistungsdichte von 5.5 kW (1.2 Liter Mahlraum) gemahlen, wobei die Pigmentkonzentration durch Zugabe von Wasser auf 10 Gew.-% eingestellt wird. Die Mahldauer entspricht zwei bis drei theoretischen Mahlpassagen. Die Mahlsuspension wird mit Isobutanol versetzt, so dass eine 1:1-Mischung aus Isobutanol und Wasser entsteht. Die Suspension wird mit Phosphorsäure auf pH 2 angesäuert und für 2 h zum Rückfluss erhitzt, nach der Abtrennung des Isobutanols durch Wasserdampfdestillation filtriert. Der Filterkuchen wird mit Wasser gewaschen, im Vakuum getrocknet und abschließend pulverisiert. Man erhält 348 g eines Pigments mit einer Halbwertsbreite des Hauptpeaks bei 28.3 °2Theta (CuK_{α}) bei 0.485° 2Theta und einer mittleren Teilchengröße von 36 nm (TEM), wobei der Anteil an Teilchen größer als 79 nm unter 5% liegt.
Anwendungsbeispiele Colorfilter:
7.2 g ®Joncryl 611 (Styrol-Acrylatharz, Johnson Polymers) werden für eine Stunde in 13.4 g PGMEA gerührt und unter Rühren mit weiteren 42 g PGMEA, 7.2 g Pigment, 1.8 g ®Solsperse 24000 und 0.36 g Solsperse 22000 (Avecia) versetzt. Nach Zugabe von 122 g Zirkonoxid-Perlen (0.5-0.7 mm) wird für zwei Stunden im Paint Shaker dispergiert. Die Pigmentdispersion wird mit Hilfe eines Spincoaters (POLOS Wafer Spinner) auf Glasplatten (SCHOTT, Lasergeschnitten, 10 x 10 cm) aufgetragen und der Kontrastwert (Goniometer DMS 803, Spektrograph CCD-SPECT2) gemessen.

Die Pigmente aus Beispielen 1 - 6 sind aufgrund ihres hohen Kontrastwertes für Colorfilter-Anwendungen gut geeignet.

## Patentansprüche

1. Verfahren zur Herstellung von C.I. Pigment Red 254 mit einer mittleren Teilchengröße d₅₀ von 10 bis 120 nm und einer Halbwertsbreite des Peaks bei 28.3° 2Theta von 0.2 bis 0.7° 2Theta im Röntgenpulverdiffraktogramm mit Cu-Kₐₗₚₕₐ Strahlung, **gekennzeichnet durch** eine Mahlung eines kristallinen Rohprodukts von C.I. Pigment Red 254 in einer Rührwerkskugelmühle, die mit einer Leistungsdichte von mehr als 1,0 kW pro Liter Mahlraum und einer Rührwerksumfanggeschwindigkeit von mehr als 12m/s betrieben wird, in einem flüssigen Medium unter Einwirkung von Mahlkörpern.

2. Verfahren nach Anspruch 1, **dadurch gekennzeichnet, dass** das kristalline Rohprodukt eine Halbwertsbreite des Peaks bei 28.3° 2Theta von 0.1 bis 0.5° 2Theta im Röntgenpulverdiffraktogramm mit Cu-Kₐₗₚₕₐ Strahlung hat.

3. Verfahren nach Anspruch 1 oder 2, **dadurch gekennzeichnet, dass** das kristalline Rohprodukt eine mittlere Teilchengröße von 150 bis 1000 nm hat.

4. Verfahren nach einem oder mehreren der Ansprüche 1 bis 3, **dadurch gekennzeichnet, dass** das flüssige Medium Wasser oder ein wässrig-organisches Medium ist.

5. Verfahren nach einem oder mehreren der Ansprüche 1 bis 4, **dadurch gekennzeichnet, dass** das flüssige Medium Wasser oder eine Mischung aus Wasser und C₁-C₆-Alkoholen, Glykolen und/oder N-Methyl-pyrrolidon ist.

6. Verfahren nach einem oder mehreren der Ansprüche 1 bis 5, **dadurch gekennzeichnet, dass** die Rührwerkskugelmühle mit einer Leistungsdichte von mehr als 1,5 kW pro Liter Mahlraum betrieben wird.

7. Verfahren nach einem oder mehreren der Ansprüche 1 bis 6, **dadurch gekennzeichnet, dass** als Mahlkörper Kugeln aus Zirkonoxid, Zirkonmischoxid, Aluminiumoxid oder Quarz verwendet werden.

8. Verfahren nach einem oder mehreren der Ansprüche 1 bis 7, **dadurch gekennzeichnet, dass** die Verweilzeit des Mahlguts in der Rührwerkskugelmühle zwischen 3 und 60 Minuten beträgt.

9. Verfahren nach einem oder mehreren der Ansprüche 1 bis 8, **dadurch gekennzeichnet, dass** die Mahlung bei Temperaturen im Bereich von 0 bis 100°C durchgeführt wird.

10. Verfahren nach einem oder mehreren der Ansprüche 1 bis 9, **dadurch gekennzeichnet, dass** das kristalline Rohprodukt als wasserfeuchter Filterkuchen oder als Feuchtgranulat eingesetzt wird.

## Claims

1. A process for preparing C.I. Pigment Red 254 having an average particle size d₅₀ of 10 to 120 nm and a 2theta value at half peak height for the peak at 28.3° of 0.2 to 0.7° 2theta in the X-ray powder diffractogram with Cu-Kₐₗₚₕₐ radiation, which comprises grinding a crude crystalline product of C.I. Pigment Red 254 in a stirred ball mill, which is operated with a power density of more than 1.0 kW per liter of grinding space and a peripheral stirrer speed of more than 12 m/s, in a liquid medium under the action of grinding media.

2. The process as claimed in claim 1, wherein the crude crystalline product has a 2theta value at half peak height for the peak at 28.3° of 0.1 to 0.5° 2theta in the X-ray powder diffractogram with Cu-Kₐₗₚₕₐ radiation.

3. The process as claimed in claim 1 or 2, wherein the crude crystalline product has an average particle size of 150 to 1000 nm.

4. The process as claimed in one or more of claims 1 to 3, wherein the liquid medium is water or an aqueous organic medium.

5. The process as claimed in one or more of claims 1 to 4, wherein the liquid medium is water or a mixture of water and C₁-C₆ alcohols, glycols and/or N-methylpyrrolidone.

6. The process as claimed in one or more of claims 1 to 5, wherein the stirred ball mill is operated with a power density of more than 1.5 kW per liter of grinding space.

7. The process as claimed in one or more of claims 1 to 6, wherein grinding media used are balls of zirconium oxide, zirconium mixed oxide, aluminum oxide or quartz.

8. The process as claimed in one or more of claims 1 to 7, wherein the residence time of the millbase in the stirred ball mill is between 3 and 60 minutes.

9. The process as claimed in one or more of claims 1 to 8, wherein the grinding is carried out at temperatures in the range from 0 to 100°C.

10. The process as claimed in one or more of claims 1 to 9, wherein the crude crystalline product is employed in the form of water-moist filtercakes or in the form of moist granules.

## Revendications

1. Procédé pour la préparation de pigment rouge C.I. Pigment Red 254 ayant une taille moyenne de particule d₅₀ de 10 à 120 nm et une largeur à mi-hauteur du pic à 28,3° en 2thêta de 0,2 à 0,7° en 2thêta dans le diagramme de diffraction des rayons X sur poudre dans la raie Kₐₗₚₕₐ du Cu, **caractérisé par** un broyage d'un produit brut cristallin de C.I. Pigment Red 254 dans un broyeur à boulets et à agitateur qui est utilisé à une puissance volumique de plus de 1,0 kW par litre d'espace de broyage et à une vitesse périphérique de l'agitateur de plus de 12 m/s, dans un milieu liquide et sous l'action d'éléments broyeurs.

2. Procédé selon la revendication 1, **caractérisé en ce que** le produit brut cristallin a une largeur à mi-hauteur du pic à 28,3° en 2thêta de 0,1 à 0,5° en 2thêta dans le diagramme de diffraction des rayons X sur poudre dans la raie Kₐₗₚₕₐ du Cu.

3. Procédé selon la revendication 1 ou 2, **caractérisé en ce que** le produit brut cristallin a une taille moyenne de particule de 150 à 1 000 nm.

4. Procédé selon une ou plusieurs des revendications 1 à 3, **caractérisé en ce que** le milieu liquide est l'eau ou un milieu aqueux-organique.

5. Procédé selon une ou plusieurs des revendications 1 à 4, **caractérisé en ce que** le milieu liquide est l'eau ou un mélange d'eau et d'alcools en C₁-C₆, de glycols et/ou de N-méthylpyrrolidone.

6. Procédé selon une ou plusieurs des revendications 1 à 5, **caractérisé en ce que** le broyeur à boulets et à agitateur est utilisé à une puissance volumique de plus de 1,5 kW par litre d'espace de broyage.

7. Procédé selon une ou plusieurs des revendications 1 à 6, **caractérisé en ce qu'**on utilise comme éléments broyeurs des boulets en oxyde de zirconium, oxyde mixte de zirconium, oxyde d'aluminium ou quartz.

8. Procédé selon une ou plusieurs des revendications 1 à 7, **caractérisé en ce que** le temps de séjour de la matière à broyer dans le broyeur à boulets et à agitateur est compris entre 3 et 60 minutes.

9. Procédé selon une ou plusieurs des revendications 1 à 8, **caractérisé en ce que** le broyage est effectué à des températures dans la plage de 0 à 100 °C.

10. Procédé selon une ou plusieurs des revendications 1 à 9, **caractérisé en ce que** le produit brut cristallin est utilisé sous forme de gâteau de filtration ou de produit granulé humide.
